# EUROPÄISCHE PATENTSCHRIFT

(11) **EP 2 981 809 B1**
(45) Veröffentlichungstag und Bekanntmachung des Hinweises auf die Patenterteilung: **07.10.2020**
(21) Anmeldenummer: 14723728.3
(22) Anmeldetag: 07.04.2014
(51) Int. Cl.: G01N 21/55, G01N 21/41, G01N 21/47, G01N 21/59, G01N 21/49

(54) **VORRICHTUNG ZUR MESSUNG DER STREUUNG EINER PROBE**
DEVICE FOR MEASURING THE SCATTERING OF A SAMPLE
DISPOSITIF SERVANT À MESURER LA DISPERSION D'UN ÉCHANTILLON

(30) Priorität: 06.04.2013 DE 102013005954
(43) Veröffentlichungstag der Anmeldung: 10.02.2016
(73) Patentinhaber: LUM GmbH, 12489 Berlin (DE)
(72) Erfinder: SINN, Gert, 12055 Berlin (DE); MITTENZWEY, Klaus-Henrik, 10439 Berlin (DE)
(74) Vertreter: Maikowski & Ninnemann Patentanwälte Partnerschaft mbB
(86) Internationale Anmeldenummer: PCT/EP2014/056946
(87) Internationale Veröffentlichungsnummer: WO 2014/162014

(56) Entgegenhaltungen:
- EP-A2- 2 249 145
- DE-A1- 10 032 739
- DE-A1- 10 118 671
- DE-C1- 19 647 222
- US-A1- 2012 057 172

## Beschreibung

Die Erfindung betrifft eine optische Vorrichtung zur Messung der Streuung einer Probe gemäß dem Oberbegriff des Anspruchs 1.

Vorrichtungen dieser Art sind seit längerem bekannt und werden beispielsweise auf dem Gebiet der Analytik, Umwelt-, Qualitäts- und Prozessüberwachung eingesetzt. Die Refraktion dient dabei der Erfassung von brechzahlrelevanten Substanzen (z.B. Zucker in Getränken). Aus der Absorption ergeben sich Informationen zu absorbierenden Stoffen (z.B. aromatische Kohlenwasserstoffe im Wasser), aus der elastischen Streuung zu streuenden Teilchen (z.B. Fett in Milch) und aus der inelastischen Streuung zu fluoreszierenden Substanzen (z.B. Uranin im Wasser).

DE 199 20 184 A1 beschreibt eine Vorrichtung für die Erfassung von diffuser und spekularer Reflexion von im Wesentlichen undurchsichtigen Proben. DE 10 2004 018 754 A1 beschreibt dagegen eine Vorrichtung zur Messung der Streuung und Absorption von im Wesentlichen transparenten Proben. Beiden Vorrichtungen gemeinsam ist, dass Strahlung divergent auf eine abbildende Linse fällt und parallelisiert in die Probe einkoppelt. Bei transparenten Proben erreicht diese Einkoppelstrahlung einen der Probe nachgeordneten Spiegel und wird in den Sensor zurück reflektiert. Durch die Linse wird diese durch die Probe transmittierte Strahlung auf einen Empfänger abgebildet. Bei undurchsichtigen Proben wird im Wesentlichen die von der Grenzfläche Schutzelement und Probe spekular reflektierte Strahlung auf dem Empfänger abgebildet, die über die Refraktion der Probe Auskunft gibt. Empfänger und Strahlungsquelle sind in einer gemeinsamen Ebene (Strahlungs- und Empfangsebene) lokalisiert. Empfänger und Strahlungsquelle können dabei auch die Endflächen von Lichtwellenleitern sein. Der Empfänger wird neben der an der Grenzfläche zur Probe spekular reflektierten Strahlung auch von an weiteren Grenzflächen (Innenseite eines Schutzfensters und bei transparenten Proben die Transmission über einen Spiegel) spekular reflektierter Strahlung und von Streustrahlung der Probe beaufschlagt. Das sind Störungen, die eine genaue Refraktionsmessung verhindern.

In US 8 355 121 B2 wird deshalb eine sensortechnische Vorrichtung beschrieben, die die synchrone Messung der Refraktion, Streuung und Absorption von Proben gestattet und den genannten Nachteil zur Refraktionsmessung mit o.g. Vorrichtungen aufhebt. Der grundsätzliche Aufbau ist den obigen Vorrichtungen ähnlich. Strahlungsquelle, Transmissionsempfänger und ein Streuempfänger sind in der Strahlungs- und Empfangsebene lokalisiert, die in der Brennebene der Linse sitzt. Ein weiterer Streuempfänger ist innerhalb der einfachen Brennweite und in Nähe der Linse sowie außerhalb ihrer optischen Achse angeordnet. Darüber hinaus ist zwischen der Strahlungs- und Empfangsebene und der Linse eine weitere Strahlungsquelle (Refraktionsstrahlungsquelle) lokalisiert. Diese befindet sich ebenfalls innerhalb der einfachen Brennweite der Linse, ist außerhalb ihrer optischen Achse angeordnet und beaufschlagt Schutzelement und Probe. Die von der probenseitigen Grenzfläche des Schutzelementes und Probe spekular reflektierte Strahlung wird von einem weiteren Empfänger erfasst, der sensorseitig außerhalb der einfachen Brennweite und der optischen Achse der Linse lokalisiert ist. Die von der sensorseitigen Grenzfläche Luft und Schutzelement spekular reflektierte Strahlung trifft auf keinen Empfänger und stört demnach auch nicht die Messung. Auf den Refraktionsempfänger fallende und störende Streustrahlungen werden mit der von einem Streuempfänger gemessenen Streustrahlung korrigiert. Im Vergleich zu o.g. Anordnungen kann hiermit die Refraktion ohne größere Störung ermittelt werden.

In DE 10 2009 020 252 B4 wird eine sehr ähnliche sensortechnische Vorrichtung für die Messung von Fluoreszenzstrahlung verwendet, die auch die Messung von Referenzstrahlungen beschreibt. Referenzstrahlungen sind dabei aus dem Anregungsstrahlengang ausgekoppelte Photonenteilströme, die zur Intensität der Anregungsstrahlung proportional sind. Sie dienen der Kompensation von Intensitätsfluktuationen und Drifterscheinungen der Strahlungsquelle. Dabei werden Referenzphotonen im Wesentlichen über zusätzlich montierte Strahlungsteiler auf optoelektronische Empfänger (Referenzempfänger) geleitet. Der Strahteiler ist zwischen der Strahlungsquelle und dem Abbildungselement lokalisiert.

Vorrichtungen dieser Art haben einerseits wegen der Möglichkeit, mehrere optische Größen in einem einzigen Messvorgang zu ermitteln, den großen Vorteil, viele unterschiedliche und komplexe Messaufgaben lösen zu können. Andererseits besteht eine grundsätzliche technische Schwierigkeit darin, die einzelnen Komponenten des Systems so anzuordnen, dass (i) die Komponenten selbst sich nicht gegenseitig beeinflussen und etwaige externe Einflüsse (z.B. Temperatur) auf die Komponenten zwecks einfacher Korrektur gleichermaßen wirken und (ii) dass zwecks sicherer Dateninterpretation einfache mathematische Zusammenhänge zwischen der Streustrahlung und der Extinktion der Probe gelten und eine gemessene Strahlung nicht oder nur wenig durch eine andere Strahlung störend beeinflusst wird. Sind diese Punkte nicht ausreichend gut beachtet, führt das stets zu Ungenauigkeiten bei der Erfassung der Refraktion und/oder Streuung und/oder Absorption einer Probe. Das begrenzt die Einsatzvielfalt.

Weitere Vorrichtungen zur Messung der Streuung einer Probe sind beispielsweise aus den Dokumenten DE 100 32 739 A1, US 2012/057172 A1, DE 101 18 671 A1 und EP 196 47 222 A2 bekannt.

Die DE 196 47 222 C1 beschreibt eine Vorrichtung zur kombinierten Absorptions- und Remissionsspektroskopie, bei der ein teildurchlässiger Spiegel verwendet wird.

Daraus ergibt sich die Aufgabe, eine Vorrichtung für die synchrone Messung der Refraktion und/oder Streuung und/oder Absorption von Proben zu realisieren, die insgesamt durch eine höhere Messgenauigkeit und damit durch eine höhere Einsatzvielfalt gekennzeichnet ist.

Hierzu ist erfindungsgemäß Folgendes als nachteilig erkannt worden. Die verwendeten Elemente wie Strahlungsquelle, Refraktionsstrahlungsquelle, Streuempfänger, Refraktionsempfänger und Referenzempfänger bzw. die ihnen zugeordneten Lichtwellenleiterendflächen sind größtenteils an verschiedenen Orten im Sensor lokalisiert. Lediglich Strahlungsquelle, Transmissionsempfänger und ein Streuempfänger liegen in einer Ebene. Eine solche komplexe heterogene Struktur innerhalb eines Sensors hat zur Folge, dass jede Komponente für sich ein Eigenleben (z.B. aufgrund von Temperaturgradienten innerhalb des Sensors) führen kann und somit die verschiedenen gemessenen Strahlungen nicht mehr miteinander vergleichbar sind, was größere Ungenauigkeiten in den Kalibrierfunktionen nach sich zieht. Darüber hinaus ist bei derart komplexen und heterogenen Strukturen der Fertigungsaufwand hoch.

Als nachteilig wird weiterhin die Art und Weise der Erfassung der Referenzstrahlung angesehen. Diese Strahlung wird innerhalb des optischen Systems, zwischen Strahlungsquelle und Abbildungselement ausgekoppelt. Damit ist diese Referenz vornehmlich für die Erfassung von Intensitätsfluktuationen und Drifterscheinungen der Strahlungsquelle geeignet. Änderung der Transmission der nachgeordneten Optik (z.B. infolge Alterung, mechanischer Spannungen in Klebungen, thermischer Einflüsse u.a.) können so allerdings nicht erfasst werden. Darüber hinaus besteht das Risiko, dass störende Streuungen aus der Probe über den Einkoppelkanal auf den Referenzempfänger fallen.

Verbesserungswürdig ist auch die Refraktionsmessung. Der Refraktionsempfänger in Vorrichtungen nach US 8 355 121 B2 empfängt auch Streuung aus der Probe. Das ist eine Störung und es wird dort für eine Korrektur vorgeschlagen, die mit einem separaten Streuempfänger ermittelte Streuung zu verwenden. Der besagte separate Streuempfänger ist jedoch nicht in unmittelbarer Nähe des Refraktionsempfängers angeordnet, was für eine Streuungsmessung, die die auf den Refraktionsempfänger fallende Streuung repräsentieren soll, allerdings vorteilhaft wäre. Dieser Umstand kann bei bestimmten Anwendungen (z.B. bei variierenden Teilchengrößen) zu Ungenauigkeiten bei der Erfassung der Refraktion führen.

Es ist weiter der folgende Umstand in der Streuungsmessung erkannt worden. Der innerhalb der einfachen Brennweite der Linse und außerhalb der optischen Achse lokalisierte Streuempfänger wird mit Streustrahlung aus einem Probenvolumen (Streuvolumen) beaufschlagt, das sich hinter dem sensorseitigen Schutzelement befindet. Dieses Streuvolumen wird einerseits bestimmt durch die Überlagerung des durch die in die Probe eingekoppelte Strahlung (Einkoppelstrahlung) beaufschlagten Volumens mit dem vom Streuempfänger erfassten Volumen. Andererseits wird dieses Streuvolumen auch durch die Extinktion der Probe bestimmt. Die Extinktion stellt die Schwächung von Strahlung infolge Streuung und Absorption in der Probe dar und charakterisiert die optische Dichte. Im Falle transparenter Proben ist die Größe bzw. die Länge des Streuvolumens (entlang derer sich die Einkoppelstrahlung ausbreitet) konstant, weil die Eindringtiefe der Einkoppelstrahlung in der Probe stets größer ist als die Länge des Streuvolumens. Im Falle wenig transparenter Proben dringt die Einkoppelstrahlung nur noch wenig in die Probe ein. Das Streuvolumen wird kleiner, ist abhängig von der Extinktion der Probe und ist somit nicht mehr konstant. Beide Fälle sind durch verschiedene Zusammenhänge zwischen der Streustrahlung und der Extinktion der Probe gekennzeichnet. Das macht die Interpretation von Daten bzw. das Erstellen von Kalibrierfunktionen für praktische Anwendungen schwierig. Außerdem wird es als nachteilig angesehen, dass die von dem innerhalb der einfachen Brennweite des Abbildungselementes angeordneten Streuempfänger erfasste Streuung in einem größeren Streuwinkelbereich liegt, also nicht eindeutig einer bestimmten Richtung zuzuordnen ist. Die Messung unter verschiedenen und definierten Streuwinkeln ist jedoch beispielsweise bei der Überwachung von Teilchenkonzentrationen von Vorteil: Wenn sich Teilchengrößenverteilungen ändern, dann ändert sich damit auch die Streuintensität. Die Streuintensität ist somit nicht mehr allein von der Teilchenkonzentration abhängig. Es wird eine Konzentration ermittelt, die nicht der Realität entspricht. Da die winkelabhängige Streuung eine Funktion der Teilchengröße ist, könnte mit einer Messung der Streuung unter verschiedenen Winkeln eine Kompensation der beschriebenen Störung vorgenommen werden.

Darüber hinaus zeigt sich das Folgende. Wenn Streuung und Transmission gleichzeitig gemessen werden sollen, dann erfasst der Streuempfänger Rückwärtsstreuung aus der zum Spiegel transmittierten Einkoppelstrahlung sowie Vorwärtsstreuung aus der vom Spiegel reflektierten Einkoppelstrahlung. Mit Zunahme der Teilchenkonzentration steigt zunächst die gemessene Streuintensität. Bei weiterer Zunahme erreicht die transmittierte Einkoppelstrahlung nicht mehr den Spiegel. Damit registriert der Streuempfänger keine Vorwärtsstreuung mehr. Die gemessene Streuintensität sinkt. Es gibt damit keine eindeutige Korrelation zwischen der Streuung und der Extinktion der Probe.

Die oben genannte Aufgabe wird erfindungsgemäß mit einer Vorrichtung zur Messung der Streuung einer Probe gemäß den Merkmalen des Anspruchs 1 gelöst. Die Vorrichtung umfasst mindestens einen ersten und einen zweiten Streuempfänger zum Empfang von Streustrahlung der Probe und mindestens ein Abbildungselement, über das Strahlung zur Probe und von der Probe zu den Streuempfängern gelangen kann. Der erste und der zweite Streuempfänger sind in einer gemeinsamen planen oder sphärisch gekrümmten Fläche, die senkrecht zu einer optischen Achse des Abbildungselementes orientiert ist, angeordnet, wobei der erste Streuempfänger zum Empfang gesättigter Streustrahlung der Probe und der zweite Streuempfänger zum Empfang linearer Streustrahlung der Probe ausgebildet und angeordnet ist. Der erste Streuempfänger ist so angeordnet, dass er Streustrahlung aus einem größeren Volumen der Probe empfängt als der zweite Streuempfänger. Die Vorrichtung umfasst weiterhin ein Schutzelement, das auf einer den Streuempfängern zugewandten Seite der Probe anzuordnen ist, sowie mindestens einen in der Fläche der Streuempfänger angeordneten Refraktionsempfänger zum Empfang von an einer probenseitigen Grenzfläche des Schutzelements spekular reflektierten Strahlung und mindestens einen in der Fläche der Streuempfänger angeordneten Referenzempfänger zum Empfang von an einer sensorseitigen Grenzfläche des Schutzelements reflektierten Strahlung.

Das Abbildungselement weist mindestens eine erste und eine zweite Linse auf, deren optische Achsen parallel zueinander verlaufen, wobei die Strahlungsquelle außerhalb der optischen Achse der ersten Linse angeordnet ist, und wobei die erste Linse mit Einkoppelstrahlung der Strahlungsquelle beaufschlagbar ist und über die erste Linse der erste Streuempfänger und der Referenzempfänger und über die zweite Linse der zweite Streuempfänger und der Refraktionsempfänger beaufschlagbar sind.

Alternativ weist das Abbildungselement eine erste, zweite und dritte Linse auf, deren optische Achsen parallel zueinander verlaufen, wobei die Strahlungsquelle außerhalb der optischen Achse der ersten Linse angeordnet ist, und wobei die erste Linse mit Einkoppelstrahlung der Strahlungsquelle beaufschlagbar ist und über die erste Linse der erste Streuempfänger, über die zweite Linse der zweite Streuempfänger und der Refraktionsempfänger und über die dritte Linse der Referenzempfänger beaufschlagbar sind.

Die sphärisch gekrümmte Fläche ist insbesondere bezüglich der optischen Achse symmetrisch angeordnet. Beispielsweise bildet ein Abschnitt der optischen Achse einen Krümmungsradius der Fläche aus.

Gemäß einem Ausführungsbeispiel der Erfindung weist die Vorrichtung mindestens einen Transmissionsempfänger zum Empfang einer durch die Probe transmittierten Strahlung auf, wobei der Transmissionsempfänger in der Fläche der Streuempfänger angeordnet ist.

Darüber hinaus kann eine Strahlungsquelle in der Fläche der Streuempfänger angeordnet sein. Beispielsweise verläuft die Fläche, in der die Streuempfänger angeordnet sind, in der Brennebene des Abbildungselementes. Insbesondere ist die Strahlungsquelle so ausgebildet und angeordnet ist, dass mit ihr ein vorbestimmtes Volumen der Probe bestrahlbar ist.

Insbesondere ist der zweite Streuempfänger so angeordnet ist, dass er Streustrahlung aus einem vorgebbaren Volumen der Probe empfängt. Hierbei kann das vorgebbare Volumen dadurch vorgegeben sein, dass der Querschnitt der von der Strahlungsquelle erzeugten Strahlung und/oder der Streustrahlung mit einer Blende festgelegt ist. Möglich ist auch, dass das vorgebbare Volumen durch den Abstand des Abbildungselementes zu der gemeinsamen Fläche und/oder zur Probe festgelegt ist.

Für die Erzeugung und Erfassung von linearer und gesättigter Streustrahlung sind also mit der Einkoppelstrahlung Volumina definierter Größen in der Probe bestrahlbar und mit den Empfängern Volumina definierter Größen von der Probe erfassbar. Für die lineare Streustrahlung handelt es sich um ausreichend kleines Volumen und bei der gesättigten Streustrahlung um ein ausreichend großes Volumen der Probe. Dies kann einerseits wie erwähnt durch Einfügen einer Blende oder mehrerer Blenden mit definierter Öffnung in die Strahlengänge realisiert werden. Dies kann andererseits auch durch Einstellen definierter Abstände des Abbildungselementes zur Strahlungs- und Empfangsebene und / oder zum sensorseitigen Schutzelement erfolgen.

Grundsätzlich ist es mit diesen Maßnahmen möglich, parasitäre Strahlungen im Sensor zu reduzieren und so die Messung der Refraktions-, Streu- und Transmissionsstrahlung zu optimieren. Insbesondere kann damit die Größe des Streuvolumens der Probe optisch eingestellt werden. Das kann zum einen den Vorteil haben, dass z.B. bei Proben mit hoher Extinktion infolge Streuung das Streuvolumen der Probe ausreichend klein gestaltet werden kann, um eine lineare Streustrahlung überhaupt erzeugen und messen zu können. Ein weiterer Vorteil ist z.B. zum anderen, dass das funktionale Verhalten der Intensität der linearen Streustrahlung, der gesättigten Streustrahlung und der Transmission steuerbar ist. Messdynamik, Signal-Rausch-Verhältnisse und Arbeitsbereiche sind so in einfacher Weise optimierbar.

Beispielsweise ist der erste Streuempfänger näher an der Strahlungsquelle angeordnet als der zweite Streuempfänger. Denkbar ist insbesondere, dass der zweite Streuempfänger näher an dem Refraktionsempfänger angeordnet ist als der erste Streuempfänger, wobei insbesondere der erste Streuempfänger in unmittelbarer Nähe der Strahlungsquelle und der zweite Streuempfänger in unmittelbarer Nähe des Refraktionsempfängers angeordnet ist.

In einer anderen Ausgestaltung der Erfindung weist die Vorrichtung mindestens ein zweites Schutzelement auf, das auf einer den Streuempfängern abgewandten Seite der Probe anzuordnen ist.

Die Vorrichtung kann auch einen Reflektor umfassen, der auf einer den Streuempfängern abgewandten Seite der Probe anzuordnen ist. Beispielsweise ist der Reflektor spekular oder diffus reflektierend ausgebildet. Denkbar ist zudem, dass durch den Transmissionsempfänger mittels des hinter dem zweiten Schutzelement angeordneten Reflektors durch die Probe zurück transmittierte Strahlung empfangbar ist.

Beispielsweise umfasst die Vorrichtung einen Reflektor, der mit Einkoppelstrahlung einer weiteren in der Fläche der Streuempfänger angeordneten Strahlungsquelle beaufschlagbar ist, wobei der Referenzempfänger die am Reflektor reflektierte Strahlung empfängt. Die Intensität der Einkoppelstrahlung der weiteren Strahlungsquelle kann proportional zu der Intensität der Einkoppelstrahlung der Strahlungsquelle zur Beaufschlagung der Streuempfänger sein.

Gemäß einer anderen Ausgestaltung der Vorrichtung sind sensorseitige Strahlungsquellen und Empfänger in einer gemeinsamen Strahlungs- und Empfangsebene in der Weise angeordnet und mindestens ein Abbildungselement und ein Schutzelement in der Weise nachgeordnet, dass für die Empfänger folgende Strahlungen empfangbar sind. Für einen Referenzempfänger ist im Wesentlichen eine von sensorseitigen Grenzflächen reflektierte Strahlung empfangbar. Für einen Refraktionsempfänger ist im Wesentlichen eine von probenseitigen Grenzflächen reflektierte Strahlung empfangbar. Für mindestens einen Streuempfänger ist im Wesentlichen eine unter einem definierten Winkel zur Einkoppelstrahlung gerichtete und gesättigte Streustrahlung der Probe empfangbar. Für mindestens einen weiteren Streuempfänger ist im Wesentlichen eine unter einem definierten Winkel zur Einkoppelstrahlung gerichtete und lineare Streustrahlung der Probe empfangbar. Für einen Transmissionsempfänger ist im Wesentlichen eine durch die Probe transmittierte Strahlung empfangbar. Die Empfänger sind dabei wahlweise verwendbar.

Durch die erfindungsgemäße Vorrichtung wird erreicht, dass der Sensor eine nur wenig komplexe Struktur in der Anordnung seiner Elemente aufweist, eine für das gesamte optische System repräsentative und von störender Streuung freie Referenz erfasst werden kann, die Refraktion besser streukorrigiert werden kann, eine von Störungen freie und einfach auswertbare Streuung unter verschiedenen gut definierten Winkeln messbar ist und eine Transmissionsmessung problemlos, d.h. ohne die Streuungsmessung zu stören, ergänzt und durchgeführt werden kann. Das führt zu einer höheren Messgenauigkeit und damit zur Erhöhung der Einsatzvielfalt des Sensors. Wenn von einer gesättigten Streustrahlung die Rede ist, dann ist damit gemeint, dass das vom Streuempfänger erfasste Streuvolumen der Probe nicht begrenzt und somit für den Streuempfänger auch unendlich groß ist.

Diese Streustrahlung ist damit nicht mehr von der Ausdehnung des Streuvolumens abhängig, sondern nur noch von der Extinktion der Probe.

Die Intensität der gesättigten Streustrahlung ist eine einfache Funktion des Quotienten aus Streukoeffizient und Extinktionskoeffizient. Bei der linearen Streustrahlung ist das vom Streuempfänger erfasste Streuvolumen der Probe begrenzt und somit für den Streuempfänger auch endlich groß. Diese Streustrahlung ist damit von der Ausdehnung des Streuvolumens abhängig. Die Intensität der linearen Streustrahlung ist eine einfache lineare Funktion des Streukoeffizienten. Wenn von gerichteter Streustrahlung die Rede ist, dann soll das heißen, dass die vom Streuempfänger empfangene Streustrahlung einen definierten Winkel zur Einkoppelstrahlung hat. Streuung bedeutet grundsätzlich, dass neben der elastischen Streuung auch die inelastische Streuung gemeint sein kann. Eine Form dazu ist z.B. die Fluoreszenz. Wenn von einer wahlweisen Verwendung der Empfänger in der gemeinsamen Strahlungs- und Empfangsebene die Rede ist, dann heißt das auch, dass die erfindungsgemäße Vorrichtung für die Messung von beispielsweise nur einer Größe, z.B. der Refraktion, verwendet werden kann. Welche Größen tatsächlich gemessen werden, hängt von der konkreten Anwendung ab. Das heißt weiterhin, dass auch die Strahlungsquellen wahlweise, in Abhängigkeit von den ausgewählten Empfängern, verwendet werden. Die gemeinsame Fläche (Strahlungs- und Empfangsebene) kann plan oder gekrümmt ausgebildet sein. Mit einer probenseitigen Grenzfläche können die Grenzfläche des Schutzelementes zur Probe aber auch dem Schutzelement nachgeordnete Grenzflächen, wie z.B. Oberflächen von Festkörperproben, gemeint sein. Sensorseitige Grenzflächen sind zwischen der Strahlungs- und Empfangsebene und dem Schutzelement angeordnet und können z.B. die sensorseitige Grenzfläche des Schutzelementes, Grenzflächen des Abbildungselementes oder zusätzlich eingebrachte Grenzflächen sein. Wenn von reflektierter Strahlung die Rede ist, dann kann das spekular oder diffus reflektierte Strahlung sein.

Bei einer bevorzugten Ausgestaltung der Erfindung wird das Abbildungselement aus zwei Linsen gleicher Brennweite gebildet. Dabei befindet sich die Strahlungs- und Empfangsebene in den Brennebenen der beiden Linsen, deren optische Achsen parallel zueinander sowie senkrecht zur Strahlungs- und Empfangsebene und zu dem sensorseitigen Schutzelement ausgerichtet sind. Eine Strahlungsquelle ist dabei außerhalb der optischen Achse der einen Linse angeordnet, die von Einkoppelstrahlung dieser Strahlungsquelle beaufschlagt wird. Über diese Linse sind der Referenzempfänger und der Streuempfänger für die gesättigte Streustrahlung sowie über die andere Linse der Refraktionsempfänger und der Streuempfänger für die lineare Streustrahlung beaufschlagbar, wobei sich der Streuempfänger für die gesättigte Streustrahlung in unmittelbarer Nähe der Strahlungsquelle und der Streuempfänger für die lineare Streustrahlung in unmittelbarer Nähe des Refraktionsempfängers befinden. Mit dieser Vorrichtung wird erreicht, dass zum einen die divergente Einkoppelstrahlung durch die Linse kollimiert wird. Zum anderen werden auch die Aperturen der Empfänger kollimiert, was bedeutet, dass die Streuempfänger im Wesentlichen mit unter jeweils definierten Winkeln verlaufenden parallelen Streustrahlungen der Probe beaufschlagt werden.

Eine weitere vorteilhafte Ausgestaltung der Erfindung besteht darin, dass in der gemeinsamen Strahlungs- und Empfangsebene eine weitere Strahlungsquelle und ein weiterer Empfänger als Transmissionsempfänger angeordnet sind. Die Strahlungsquelle befindet sich in unmittelbarer Nähe der optischen Achse der einen Linse, die von Einkoppelstrahlung dieser Strahlungsquelle beaufschlagt wird. Über diese Linse koppelt die Strahlung in die Probe ein. Gegenüber dem sensorseitigen Schutzelement befindet sich ein weiteres Schutzelement mit einem nachgeordneten Reflektor. Mit Hilfe dieses Reflektors ist über dieselbe Linse für den Transmissionsempfänger im Wesentlichen eine durch die Probe transmittierte Strahlung empfangbar. Dadurch wird erreicht, dass die transmittierte Strahlung nicht die Streuungsmessung stört.

Bei einer weiteren Ausgestaltung sind die Strahlungsquelle von der optischen Achse der einen Linse und der Transmissionsempfänger von der optischen Achse der anderen Linse in der Weise beabstandet, dass der Transmissionsempfänger über die andere Linse beaufschlagbar ist. Das heißt, dass die Einkopplung zur Transmission über die eine Linse und die Messung der Transmission über die andere Linse erfolgen. Einkopplung und Messung zur Transmission sind dadurch in der Strahlungs- und Empfangsebene örtlich voneinander entfernt. Das hat den Vorteil, dass beispielsweise die an der einen Linse spekular reflektierte Einkoppelstrahlung nicht als Störung auf den Transmissionsempfänger gelangt.

Nach einer weiteren Ausgestaltung der Erfindung kann der Reflektor für die Transmissionsmessung spekular oder diffus reflektierend ist. Dabei wird ein spekular reflektierender Reflektor, z.B. ein Spiegel, üblicherweise eingesetzt. Ein diffus reflektierender Reflektor ist nützlich, wenn die Probe transparent ist und lange Wege der Strahlung in der Probe nötig sind. Ein diffuser Reflektor ist weniger störanfällig gegenüber möglicher Dejustierungen als ein Spiegel.

Bei einer weiteren Ausgestaltung der Erfindung ist in der Strahlungs- und Empfangsebene ein Reflektor mit Einkoppelstrahlung einer weiteren Strahlungsquelle beaufschlagbar und für den Referenzempfänger eine am Reflektor reflektierte Strahlung empfangbar, wobei die Intensität der Einkoppelstrahlung proportional zu der Intensität der Einkoppelstrahlungen für Refraktion, Streuung und Transmission ist. Über diesen Reflektor wird die Referenzstrahlung für den Referenzempfänger erzeugt. Ein solcher Reflektor kann spekular oder diffus reflektierend sein und ist dann von Vorteil, wenn die Referenzstrahlung nicht von anderen sensorseitigen Grenzflächen, wie z.B. der sensorseitigen Grenzfläche des Schutzelementes, genutzt werden kann.

Bei einer bevorzugten Ausgestaltung der Erfindung ist der einen Linse ein teilduchlässiger Spiegel in der Weise nachgeordnet, dass ein Teil der Einkoppelstrahlung für Refraktion und Streuung diesen Spiegel durchdringt, in die Probe eindringt und ein Teil der gesättigten Streustrahlung der Probe von diesem Spiegel reflektiert wird, womit der Streuempfänger für die gesättigte Streustrahlung über diese Linse beaufschlagt wird. Die Strahlungsquelle und der Empfänger für die gesättigte Streustrahlung sind dadurch in der Strahlungs- und Empfangsebene örtlich voneinander entfernt. Das hat den Vorteil, dass beispielsweise die an der einen Linse spekular reflektierte Einkoppelstrahlung nicht als Störung auf den Streuempfänger gelangt. Des Weiteren können der durch die Einkoppelstrahlung bestrahlte Bereich in der Probe und der durch den Streuempfänger erfasste Bereich der Streuung der Probe optimal überlagert werden.

Das Abbildungselement kann aus mehr als zwei Linsen gebildet werden. Im Fall eines beispielsweise aus drei Linsen gebildeten Abbildungselementes ist neben der gesättigten Streustrahlung die Messung von zwei linearen Streustrahlungen bei verschiedenen Streuwinkeln durchführbar. Damit können die Streueigenschaften der Probe besser erfasst werden, was beispielsweise genauere Konzentrationsbestimmungen bei variierenden Teilchengrößenverteilungen ermöglicht.

Die Streuempfänger sind z.B. entlang einer Fläche angeordnet, deren sphärische Krümmung von dem Abbildungselement weg weist, so dass einer der Streuempfänger, der näher zur optische Achse des Abbildungselement angeordnet ist, einen größeren Abstand von einer Mittelebene des Abbildungselementes aufweist als einer der der Streuempfänger, der weiter von der optische Achse des Abbildungselements entfernt angeordnet ist.

Für den Fall, dass sich die Streuempfänger in einer planen gemeinsamen Fläche befinden, ist denkbar, dass sie entlang einer Geraden angeordnet sind, die eine optische Achse des Abbildungselementes schneidet.

Es folgt die Beschreibung zu Ausführungsbeispielen der Erfindung unter Bezugnahme auf die Figuren. Es zeigen:
Fig. 1 Stand der Technik für Vorrichtung für die synchrone Messung der Refraktion und/oder Streuung und/oder Absorption einer Probe.
Fig. 2: Vorrichtung gemäß einem ersten Ausführungsbeispiel der Erfindung für die synchrone Messung der Refraktion und/oder Streuung und/oder Absorption einer Probe mit 2-linsigem Abbildungselement.
Fig. 3: Vorrichtung gemäß einem zweiten Ausführungsbeispiel der Erfindung für die synchrone Messung der Refraktion und/oder Streuung und/oder Absorption einer Probe mit 2-linsigem Abbildungselement und Transmissionsmessung.
Fig. 4: Vorrichtung gemäß einem Beispiel für die synchrone Messung der Refraktion und/oder Streuung und/oder Absorption einer Probe mit 2-linsigem Abbildungselement und veränderter Anordnung für Referenzstrahlung und gesättigter Streustrahlung.
Fig. 5: Vorrichtung gemäß einem weiteren Beispiel für die synchrone Messung der Refraktion und/oder Streuung und/oder Absorption einer Probe mit 1-linsigem Abbildungselement.
Fig. 6: Vorrichtung gemäß einem fünften Ausführungsbeispiel der Erfindung für die synchrone Messung der Refraktion und/oder Streuung und/oder Absorption einer Probe mit 3-linsigem Abbildungselement.

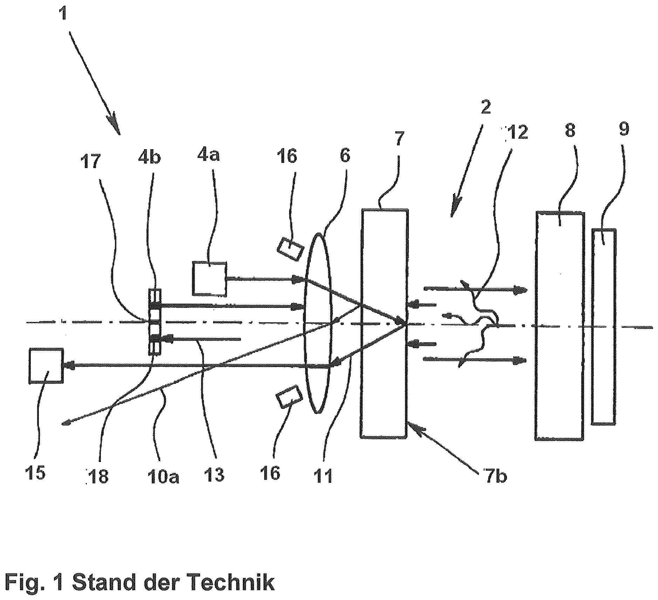

Fig. 1 zeigt den Stand der Technik zur Messung der Streuung und/oder Absorption und/oder Refraktion einer Probe 2. Die Vorrichtung besteht aus Strahlungsquellen 4a, 4b, einem Refraktionsempfänger 15, Streuempfängern 16, 17 und einem Transmissionsempfänger 18 sowie einem Abbildungselement 6, Schutzelementen 7, 8 und Spiegel 9. Die Strahlungsquelle 4b, der Streuempfänger 17 und der Transmissionsempfänger 18 sind in der Brennebene des Abbildungselementes 6 angeordnet. Die Strahlungsquelle 4a und der Streuempfänger 16 sind innerhalb der einfachen Brennweite des Abbildungselementes 6 und der Refraktionsempfänger 15 außerhalb der einfachen Brennweite des Abbildungselementes 6 angeordnet. Damit sind für den Refraktionsempfänger 15 die von der probenseitigen Grenzfläche 7b des Schutzelementes 7 spekular reflektierte Strahlung 11, für die Streuempfänger 16, 17 Streustrahlung 12 der Probe 2 sowie für den Transmissionsempfänger 18 die durch die Probe 2 transmittierte Strahlung 13 empfangbar.

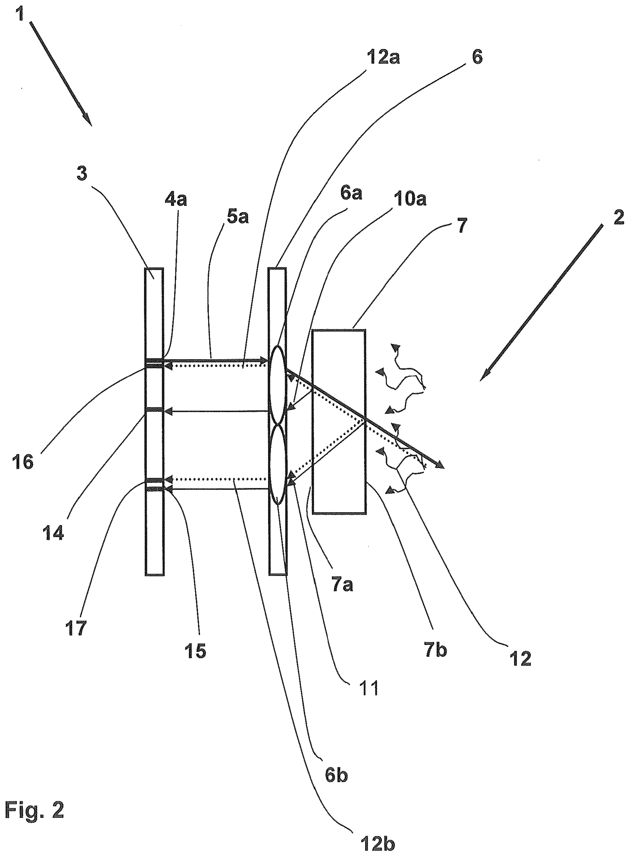

Im Sensor 1 sind gemäß den Fig. 2 bis Fig. 6 Strahlungsquellen und Empfänger in einer gemeinsamen Strahlungs- und Empfangsebene 3 in der Weise angeordnet und mindestens ein Abbildungselement 6 und ein Schutzelement 7 in der Weise nachgeordnet, dass für die Empfänger folgende Strahlungen empfangbar sind. Für einen Referenzempfänger 14 ist im Wesentlichen eine von sensorseitigen Grenzflächen reflektierte Strahlung empfangbar. Für einen Refraktionsempfänger 15 ist im Wesentlichen eine von probenseitigen Grenzflächen reflektierte Strahlung empfangbar. Für mindestens einen Streuempfänger 16 ist im Wesentlichen eine unter einem definierten Winkel zur Einkoppelstrahlung gerichtete und gesättigte Streustrahlung der Probe 2 empfangbar. Für mindestens einen weiteren Streuempfänger 17 ist im Wesentlichen eine unter einem definierten Winkel zur Einkoppelstrahlung gerichtete und lineare Streustrahlung der Probe 2 empfangbar. Für einen Transmissionsempfänger 18 ist im Wesentlichen eine durch die Probe 2 transmittierte Strahlung empfangbar. Die Empfänger sind dabei wahlweise verwendbar. Der Sensor 1 ist damit einfacher, störunanfälliger und kompakter. Mit dem Referenzempfänger 14 werden auch Änderungen der Transmission der Optik (infolge Alterung, mechanischer Spannungen in Klebungen, thermischer Einflüsse u.a.) mit erfasst. Mit der linearen Streustrahlung kann der durch Streustrahlung gestörte Refraktionsempfänger 15 gut korrigiert werden. Die mit dieser Anordnung erfassbare lineare und gesättigte Streustrahlung weisen einfache Zusammenhänge zur Extinktion der Probe 2 auf und sind deshalb in einfacher Weise auswertbar. Die Streuung 12 der Probe 2 wird unter zwei verschiedenen Winkeln zur Einkoppelstrahlung ermittelt, was zusätzliche Informationen zum Streuverhalten der Probe 2 liefert. Diese Vorrichtung ist des Weiteren geeignet, mit einer Transmissionsmessung ergänzt zu werden, ohne dabei den Streuempfänger 16 oder 17 zu stören. Strahlungsquellen und Empfänger können direkt oder/und als Endflächen von Lichtwellenleitern in der Strahlungs- und Empfangsebene 3 angeordnet sein. Im Falle von Lichtwellenleiterendflächen transportieren die einen Lichtwellenleiter die Strahlung von den Strahlungsquellen in die Strahlungs- und Empfangsebene 3 hin und die anderen Lichtwellenleiter transportieren die in der Strahlungs- und Empfangsebene 3 empfangenen Strahlungen von dieser weg.

In Fig. 2 ist eine erfindungsgemäße Vorrichtung dargestellt, in der das Abbildungselement 6 aus Linsen 6a, 6b gleicher Brennweite besteht, wobei die Strahlungs- und Empfangsebene 3 sich in den Brennebenen der Linsen 6a und 6b befindet, deren optische Achsen parallel zueinander sowie senkrecht zur Strahlungs- und Empfangsebene 3 und zu dem Schutzelement 7 ausgerichtet sind. Eine Strahlungsquelle 4a ist außerhalb der optischen Achse der Linse 6a angeordnet, wobei die Linse 6a mit Einkoppelstrahlung 5a beaufschlagbar ist. Die Einkoppelstrahlung 5a dringt über Linse 6a mit einer Richtungsänderung in die Probe 2 ein. Über die Linse 6a sind der Referenzempfänger 14 und der Streuempfänger 16 sowie über die Linse 6b der Refraktionsempfänger 15 und der Streuempfänger 17 beaufschlagbar. Der Streuempfänger 16 ist in unmittelbarer Nähe der Strahlungsquelle 4a und der Streuempfänger 17 ist in unmittelbarer Nähe des Refraktionsempfängers 15 angeordnet. Mit dieser Vorrichtung wird erreicht, dass zum einen die divergente Einkoppelstrahlung 5a durch die Linse 6a kollimiert wird. Zum anderen werden durch die Linsen 6a, 6b auch die Aperturen der Empfänger kollimiert, was bedeutet, dass die Streuempfänger 16 und 17 im Wesentlichen mit unter jeweils definierten Winkeln verlaufenden parallelen Streustrahlungen 12a und 12b der Probe 2 beaufschlagt werden. Durch die unmittelbare Nähe von Strahlungsquelle 4a und Streuempfänger 16 ist dafür gesorgt, dass der durch die Einkoppelstrahlung 5a bestrahlte Bereich in der Probe 2 und der durch den Streuempfänger 16 erfasste Bereich der Streuung der Probe 2 ausreichend gut überlagert sind, was für die Erfassung einer gut ausgebildeten gesättigten Streustrahlung 12a erforderlich ist. Im Vergleich dazu erfasst der Streuempfänger 17 nur einen kleinen Ausschnitt des durch die Einkoppelstrahlung 5a bestrahlten Bereiches in der Probe 2. Diese Streuung ist deshalb eine lineare Streustrahlung. Dieser Ausschnitt der linearen Streustrahlung 12b befindet sich in diesem Ausführungsbeispiel in unmittelbarer Nähe des Schutzelementes 7. Durch die unmittelbare Nähe von Streuempfänger 17 und Refraktionsempfänger 15 wird erreicht, dass die Refraktion besser streukorrigiert werden kann. Des Weiteren werden mit der erfindungsgemäßen Vorrichtung in einfacher Weise die an den Grenzflächen 7a und 7b spekular reflektierten Strahlungen 10a, 11 für Referenz und Refraktion mit den Empfängern 14, 15 in der gemeinsamen Strahlungs- und Empfangsebene 3 separat erfasst.

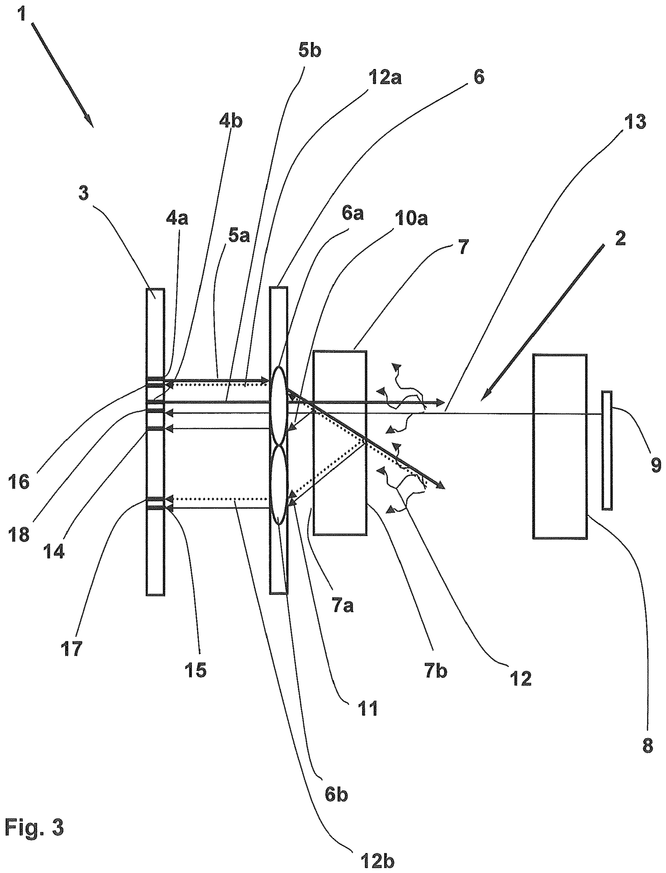

Fig. 3 zeigt eine erfindungsgemäße Vorrichtung, bei der in der gemeinsamen Strahlungs- und Empfangsebene 3 eine weitere Strahlungsquelle 4b und ein weiterer Empfänger als Transmissionsempfänger 18 in unmittelbarer Nähe der optischen Achse der Linse 6a angeordnet sind. Die Linse 6a ist mit Einkoppelstrahlung 5b beaufschlagbar. Über die Linse 6a koppelt die Strahlung 5b kollimiert und ohne größere Richtungsänderung in die Probe 2 ein. Dadurch kann die Einkoppelstrahlung 5b lange Wege durch die Probe zurücklegen, was die Empfindlichkeit der Transmissionsmessung erhöht. Gegenüber dem sensorseitigen Schutzelement 7 befindet sich ein weiteres Schutzelement 8 mit einem nachgeordneten Reflektor 9. Mit Hilfe des Reflektors 9 ist über die Linse 6a für den Transmissionsempfänger 18 im Wesentlichen eine durch die Probe 2 transmittierte Strahlung 13 empfangbar. Bei dieser Anordnung wird der Streuempfänger 16 nicht durch etwaige, von der transmittierten Strahlung 13 erzeugten Streustrahlung 12 gestört.

Bei einer weiteren Ausführung sind die Strahlungsquelle 4b von der optischen Achse der Linse 6a und der Transmissionsempfänger 18 von der optischen Achse der Linse 6b in der Weise beabstandet, dass der Transmissionsempfänger 18 über die Linse 6b beaufschlagbar ist. Das heißt, dass die Einkopplung zur Transmission über die Linse 6a und die Messung der Transmission über die Linse 6b erfolgen. Einkopplung und Messung zur Transmission sind dadurch in der Strahlungs- und Empfangsebene 3 örtlich voneinander entfernt. Das hat den Vorteil, dass beispielsweise die an der Linse 6a spekular reflektierte Einkoppelstrahlung nicht als Störung auf den Transmissionsempfänger 18 gelangt.

Davon ausgehend besteht eine weitere Ausführung darin, dass der Reflektor 9 hinter dem Schutzelement 8 spekular oder diffus reflektierend sein kann. Dabei wird ein spekular reflektierender Reflektor, z.B. ein Spiegel, üblicherweise eingesetzt. Ein diffus reflektierender Reflektor ist nützlich, wenn die Probe 2 transparent ist und lange Wege der Strahlung in der Probe nötig sind. Ein diffuser Reflektor ist weniger störanfällig gegenüber möglicher Dejustierungen als ein Spiegel.

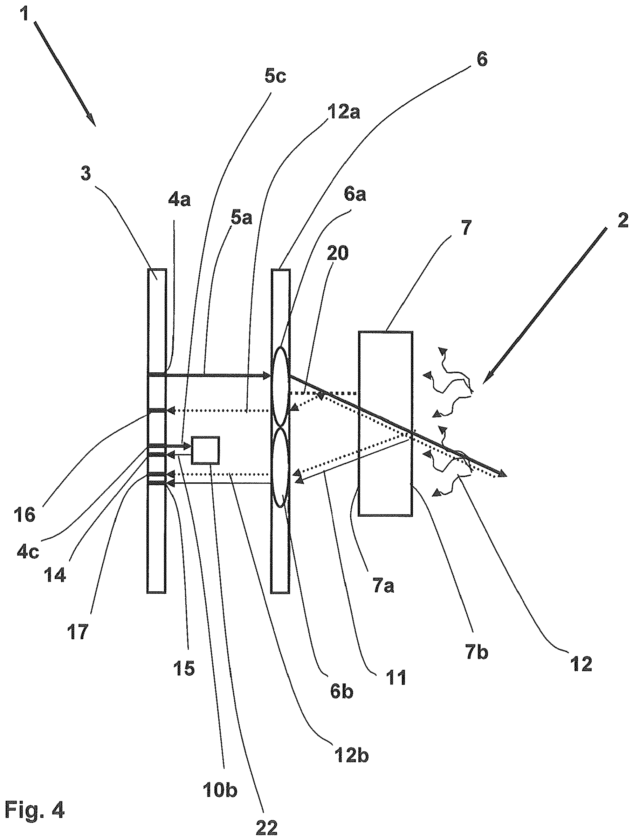

Fig. 4 zeigt ein weiteres Beispiel. In der Strahlungs- und Empfangsebene 3 ist ein Reflektor 22 mit Einkoppelstrahlung 5c einer Strahlungsquelle 4c beaufschlagbar und für den Referenzempfänger 14 eine am Reflektor 22 reflektierte Strahlung 10b empfangbar, wobei die Intensität der Einkoppelstrahlung 5c proportional zu der Intensität der Einkoppelstrahlungen 5a, 5b für Refraktion, Streuung und Transmission ist. Über diesen Reflektor 22 wird die Referenzstrahlung 10b für den Referenzempfänger 14 erzeugt. Die Einkoppelstrahlungen 5a, 5b, 5c können beispielsweise von einer gemeinsamen Strahlungsquelle stammen, die an dem einen Ende eines Lichtwellenleiterbündels eingekoppelt wird. Am anderen Ende dieses Bündels werden die Lichtwellenleiter vereinzelt und in der Strahlungs- und Empfangsebene 3 an den entsprechenden Orten angeordnet. Der Reflektor 22 kann spekular oder diffus reflektierend sein und ist dann von Vorteil, wenn die Referenzstrahlung nicht von anderen sensorseitigen Grenzflächen, wie z.B. der sensorseitigen Grenzfläche 7a des Schutzelementes 7, genutzt werden kann.

Fig. 4 zeigt weiterhin, dass der Linse 6a ein teilduchlässiger Spiegel 20 in der Weise nachgeordnet ist, dass ein Teil der Einkoppelstrahlung 5a für Refraktion und Streuung den teildurchlässigen Spiegel 20 durchdringt, in die Probe 2 eindringt und ein Teil der gesättigten Streustrahlung 12a der Probe 2 von dem Spiegel 20 reflektiert wird, womit der Streuempfänger 16 über die Linse 6a beaufschlagt wird. Die Strahlungsquelle 4a und der Empfänger 16 für die gesättigte Streustrahlung 12a sind dadurch in der Strahlungs- und Empfangsebene 3

örtlich voneinander entfernt. Das hat den Vorteil, dass beispielsweise die an der Linse 6a spekular reflektierte Einkoppelstrahlung nicht als Störung auf den Streuempfänger 16 gelangt. Des Weiteren können der durch die Einkoppelstrahlung 5a bestrahlte Bereich in der Probe 2 und der durch den Streuempfänger 16 erfasste Bereich der Streuung der Probe 2 optimal überlagert werden, was insbesondere bei transparenten Proben vorteilhaft ist. In solchen Fällen können die Wege bis zur Ausbildung einer gesättigten Streustrahlung 12a groß sein mit dem Risiko, dass der durch die Einkoppelstrahlung 5a bestrahlte Bereich in der Probe 2 und der durch den Streuempfänger 16 erfasste Bereich der Streuung der Probe 2 nach einer bestimmten Wegstrecke nicht mehr überlagert sind und somit dann keine Streustrahlung mehr vom Empfänger 16 erfasst werden kann.

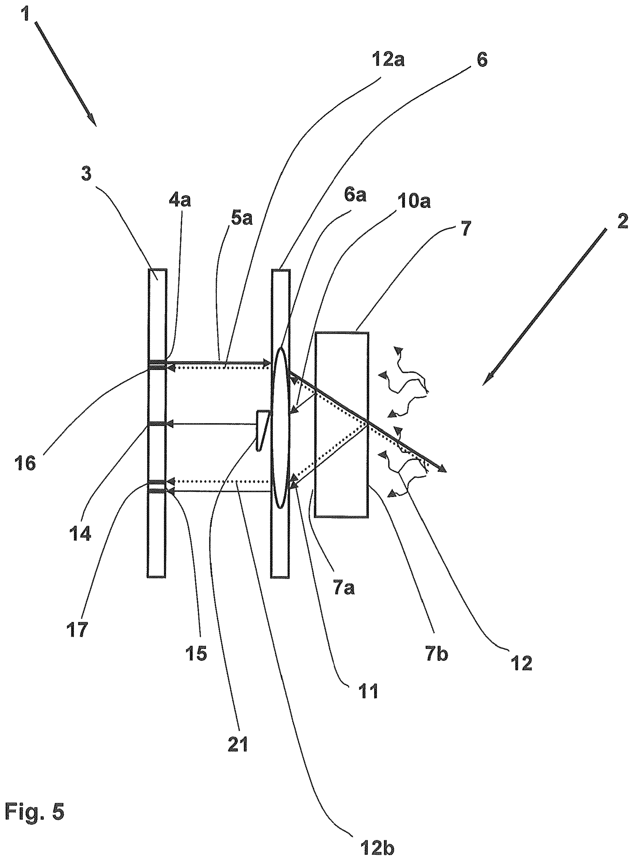

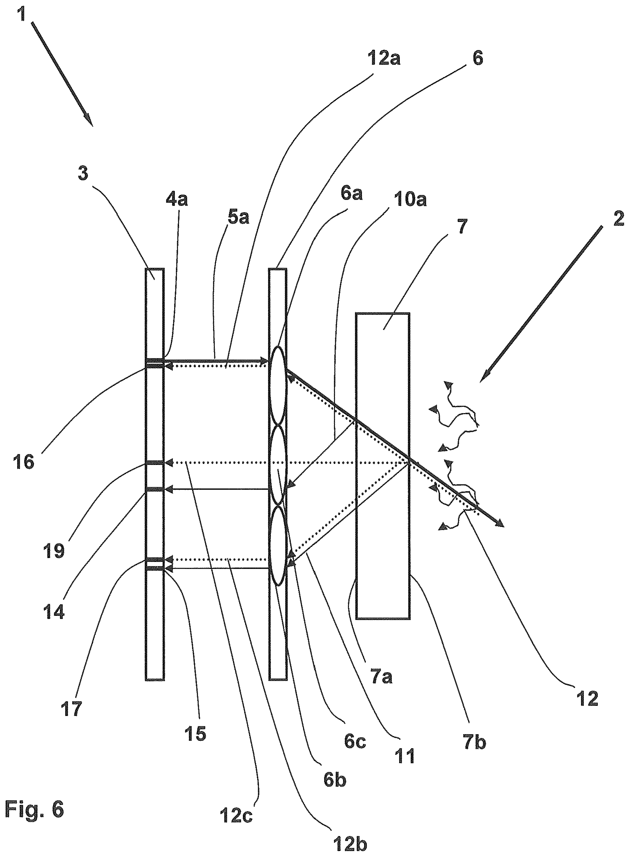

Gemäß Fig. 5 und Fig. 6 kann das Abbildungselement 6 einteilig oder mehrteilig ausgebildet sein. Das Abbildungselement 6 kann aus einer einzigen Linse 6a oder auch aus mehr als zwei Linsen 6a, 6b, 6c gebildet werden. Bei dem einlinsigen Abbildungselement 6 in Fig. 5 dient das Fenster für Strahlablenkung 21 dazu, dass die Referenzstrahlung 10a nicht in der Nähe der Empfänger 15, 17 abgebildet wird. Das Fenster 21 ist beispielsweise ein Keilprisma. Im Fall des einlinsigen Abbildungselementes 6 ist die Anzahl der eingesetzten Linsen geringer und der Sensor wird kleiner. Im Fall eines beispielsweise aus drei Linsen gebildeten Abbildungselementes 6 ist neben der gesättigten Streustrahlung 12a die Messung von zwei linearen Streustrahlungen 12b, 12c bei verschiedenen Streuwinkeln mit den Empfängern 17, 19 durchführbar. Damit können die Streueigenschaften der Probe 2 besser erfasst werden, was beispielsweise genauere Konzentrationsbestimmungen bei variierenden Teilchengrößenverteilungen ermöglicht.

### Bezugszeichen

- 1: Sensor
- 2: Probe
- 3: Strahlungs- und Empfangsebene
- 4a: Strahlungsquelle
- 4b: Strahlungsquelle
- 4c: Strahlungsquelle
- 5a: Einkoppelstrahlung
- 5b: Einkoppelstrahlung
- 5c: Einkoppelstrahlung
- 6: Abbildungselement
- 6a: Abbildungselement
- 6b: Abbildungselement
- 6c: Abbildungselement
- 7: Schutzelement sensorseitig
- 7a: sensorseitige Grenzfläche von Schutzelement (7)
- 7b: probenseitige Grenzfläche von Schutzelement (7)
- 8: Schutzelement spiegelseitig
- 9: Reflektor für Transmissionsstrahlung
- 10a: reflektierte Strahlung am Schutzelement (7), sensorseitig (Referenzstrahlung)
- 10b: reflektierte Strahlung am Reflektor (22) (Referenzstrahlung)
- 11: reflektierte Strahlung am Schutzelement (7), probenseitig (Refraktionsstrahlung)
- 12: Streuung von Probe
- 12a: Streustrahlung
- 12b: Streustrahlung
- 12c: Streustrahlung
- 13: durch Probe transmittierte Strahlung (Transmissionsstrahlung)
- 14: Referenzempfänger
- 15: Refraktionsempfänger
- 16: Streuempfänger
- 17: Streuempfänger
- 18: Transmissionsempfänger
- 19: Streuempfänger
- 20: Spiegel, teildurchlässig
- 21: Fenster für Strahlablenkung (Prisma)
- 22: Reflektor für Referenzstrahlung

## Patentansprüche

1. Vorrichtung zur Messung der Streuung einer Probe (2), mit
- mindestens einem ersten und einem zweiten Streuempfänger (16, 17) zum Empfang von Streustrahlung der Probe (2); und
- mindestens einem Abbildungselement (6), über das Strahlung zur Probe (2) und von der Probe (2) zu den Streuempfängern (16, 17) gelangen kann, wobei
- der erste und der zweite Streuempfänger (16, 17) in einer gemeinsamen planen oder sphärisch gekrümmten Fläche (3), die senkrecht zu einer optischen Achse des Abbildungselementes (6) orientiert ist, angeordnet sind;;
- einem Schutzelement (7), das auf einer den Streuempfängern (16, 17) zugewandten Seite der Probe (2) anzuordnen ist;
- mindestens einem in der Fläche (3) der Streuempfänger (16, 17) angeordneten Refraktionsempfänger (15), der zum Empfang von an einer probenseitigen Grenzfläche (7b) des Schutzelements (7) spekular reflektierten Strahlung ausgebildet ist; und
- einer in der Fläche (3) der Streuempfänger (16, 17) angeordneten Strahlungsquelle (4a),
wobei der erste Streuempfänger (16) zum Empfang gesättigter Streustrahlung der Probe (2) und der zweite Streuempfänger (17) zum Empfang linearer Streustrahlung der Probe (2) ausgebildet und angeordnet ist, wobei der erste Streuempfänger (16) so angeordnet ist, dass er Streustrahlung aus einem größeren Volumen der Probe (2) empfängt als der zweite Streuempfänger (17); wobei die Vorrichtung mindestens einen in der Fläche (3) der Streuempfänger (16, 17) angeordneten Referenzempfänger (14), der zum Empfang von an einer sensorseitigen Grenzfläche (7a) des Schutzelements (7) reflektierten Strahlung ausgebildet ist, aufweist, und wobei
das Abbildungselement (6) mindestens eine erste und eine zweite Linse (6a, 6b) aufweist, deren optische Achsen parallel zueinander verlaufen, wobei die Strahlungsquelle (4a) außerhalb der optischen Achse der ersten Linse (6a) angeordnet ist, und wobei die erste Linse (6a) mit Einkoppelstrahlung (5a) der Strahlungsquelle (4a) beaufschlagbar ist und über die erste Linse (6a) der erste Streuempfänger (16) und der Referenzempfänger (14) und über die zweite Linse (6b) der zweite Streuempfänger (17) und der Refraktionsempfänger (15) beaufschlagbar sind, oder
das Abbildungselement (6) eine erste, zweite und dritte Linse (6a, 6b, 6c) aufweist, deren optische Achsen parallel zueinander verlaufen, wobei die Strahlungsquelle (4a) außerhalb der optischen Achse der ersten Linse (6a) angeordnet ist, und wobei die erste Linse (6a) mit Einkoppelstrahlung (5a) der Strahlungsquelle (4a) beaufschlagbar ist und über die erste Linse (6a) der erste Streuempfänger (16), über die zweite Linse (6b) der zweite Streuempfänger (17) und der Refraktionsempfänger (15) und über die dritte Linse (6c) der Referenzempfänger (14) beaufschlagbar sind.

2. Vorrichtung nach Anspruch 1, **gekennzeichnet durch** mindestens einen Transmissionsempfänger (18) zum Empfang einer durch die Probe transmittierten Strahlung, wobei der Transmissionsempfänger (18) in der Fläche (3) der Streuempfänger (16, 17) angeordnet ist.

3. Vorrichtung nach Anspruch 1 oder 2, **dadurch gekennzeichnet, dass** mit der Strahlungsquelle (4a) ein vorbestimmtes Volumen der Probe (2) bestrahlbar ist.

4. Vorrichtung nach einem der vorhergehenden Ansprüche, **dadurch gekennzeichnet, dass** die Fläche (3), in der die Streuempfänger (16, 17) angeordnet sind, in der Brennebene des Abbildungselementes (6) verläuft.

5. Vorrichtung nach einem der vorhergehenden Ansprüche, **dadurch gekennzeichnet, dass** der zweite Streuempfänger (17) so angeordnet ist, dass er Streustrahlung aus einem vorgebbaren Volumen der Probe (2) empfängt, wobei
das vorgebbare Volumen dadurch vorgegeben ist, dass der Querschnitt der von der Strahlungsquelle (4a) erzeugten Strahlung und/oder der Streustrahlung mit einer Blende festgelegt ist.

6. Vorrichtung nach einem der vorhergehenden Ansprüche, **dadurch gekennzeichnet, dass** der erste Streuempfänger (16) näher an der Strahlungsquelle (4a) angeordnet ist als der zweite Streuempfänger (17).

7. Vorrichtung nach einem der vorhergehenden Ansprüche, **gekennzeichnet durch** mindestens ein zweites Schutzelement (8), das auf einer den Streuempfängern (16, 17) abgewandten Seite der Probe (2) anzuordnen ist.

8. Vorrichtung nach einem der vorhergehenden Ansprüche soweit rückbezogen auf Anspruch 3, **gekennzeichnet durch** einen Referenzstrahlungsreflektor (22), der mit Einkoppelstrahlung (5c) einer weiteren in der Fläche (3) der Streuempfänger (16, 17) angeordneten Strahlungsquelle (4c) beaufschlagbar ist, wobei der Referenzempfänger (14) die am Referenzstrahlungsreflektor (22) reflektierte Strahlung (10b) empfängt, wobei insbesondere die Intensität der Einkoppelstrahlung (5c) der weiteren Strahlungsquelle (4c) proportional zu der Intensität der Einkoppelstrahlung (5a, 5b) der Strahlungsquelle (4a, 4b) zur Beaufschlagung der Streuempfänger (16, 17) ist.

9. Vorrichtung nach den Ansprüchen 8 und 9, **dadurch gekennzeichnet,** Z dass auf einer den Streuempfängern (16,17) abgewandten Seite der Probe (2) ein Transmissionsstrahlungsreflektor (9) angeordnet ist, und dass die Strahlungsquelle (4a) und die Empfänger (14-18) in der gemeinsamen Fläche (3) so angeordnet und das Abbildungselement (6) und das erste Schutzelement (7) so nachgeordnet und ausgebildet sind, dass von dem Referenzempfänger (14) eine von der sensorseitigen Grenzfläche des Schutzelementes (7) reflektierte Strahlung, für den Refraktionsempfänger (15) eine von einer probenseitigen Grenzfläche (7a) des Schutzelementes (7) reflektierte Strahlung, von dem ersten Streuempfänger (16) eine unter einem definierten Winkel zu einer von der Strahlungsquelle (4a) erzeugten Einkoppelstrahlung gerichtete und gesättigte Streustrahlung der Probe (2), von dem zweiten Streuempfänger (17) eine unter einem definierten Winkel zur Einkoppelstrahlung gerichtete und lineare Streustrahlung der Probe (2) und von dem Transmissionsempfänger (18) eine durch die Probe (2) und das zweite Schutzelement (8) transmittierte und danach an dem Transmissionsstrahlungsreflektor (9) reflektierte und wieder durch die Probe (2) zurück transmittierte Strahlung empfangen wird.

10. Vorrichtung nach einem der vorhergehenden Ansprüche soweit rückbezogen auf Anspruch 2, **dadurch gekennzeichnet, dass** der Transmissionsempfänger (18) in unmittelbarer Nähe der oder auf der optischen Achse der ersten Linse (6a) angeordnet ist

11. Vorrichtung nach einem der vorhergehenden Ansprüche, **dadurch gekennzeichnet, dass** zur Messung der Transmission in der Fläche (3) der Streuempfänger (16, 17) eine weitere Strahlungsquelle (4b) angeordnet ist.

12. Vorrichtung nach Anspruch 11 und einem der Ansprüche 1 bis 10 soweit rückbezogen auf Anspruch 2, **dadurch gekennzeichnet, dass** die erste Linse (6a) so ausgebildet und angeordnet ist, dass sie mit Einkoppelstrahlung (5b) der weiteren Strahlungsquelle (4b) beaufschlagt wird und über die erste Linse (6a) Strahlung auf den Transmissionsempfänger (18) gelangt.

13. Vorrichtung nach einem der vorhergehenden Ansprüche, **dadurch gekennzeichnet, dass** dem Abbildungselement (6) ein teilduchlässiger Spiegel (20) so ausgebildet und nachgeordnet ist, dass ein Teil der Einkoppelstrahlung (5a) der Strahlungsquelle (4a) den Spiegel (20) durchdringt, wobei ein Teil von der Probe (2) ausgehender gesättigter Streustrahlung (12a) von dem Spiegel (20) reflektiert wird.

## Claims

1. A device for measuring scattering of a sample (2), comprising:
- at least one first and one second scattering receiver (16, 17) for receiving scattered radiation of the sample (2); and
- at least one imaging element (6) via which radiation can get to the sample (2) and from the sample (2) to the scattering receivers (16, 17), wherein
- the first and second scattering receivers (16, 17) are arranged in a common planar or spherically curved surface (3) which is perpendicularly oriented with respect to an optical axis of the imaging element (6);
- a protective element (7) which is to be arranged on a side of the sample (2) facing the scattering receivers (16, 17);
- at least one refraction receiver (15) arranged in the surface (3) of the scattering receivers (16, 17), which is configured to receive radiation specularly reflected on a sample-side boundary surface (7b) of the protective element (7); and
- a radiation source (4a) arranged in the surface (3) of the scattering receivers (16, 17),
wherein the first scattering receiver (16) is configured to receive saturated scattered radiation of the sample (2), and the second scattering receiver (17) is configured and arranged to receive linear scattered radiation of the sample (2), wherein the first scattering receiver (16) is arranged in such a way that it receives scattering radiation from a larger volume of the sample (2) than the second scattering receiver (17);
wherein the device includes at least one reference receiver (14) arranged in the surface (3) of the scattering receivers (16, 17), which is configured to receive radiation reflected on a sensor-side boundary surface (7a) of the protective element (7), and wherein
the imaging element (6) includes at least one first and one second lens (6a, 6b) whose optical axes extend parallel to each other, wherein the radiation source (4a) is arranged outside the optical axis of the first lens (6a), and wherein the first lens (6a) can be charged with coupling radiation (5a) of the radiation source (4a), and the first scattering receiver (16) and the reference receiver (14) can be charged via the first lens (6a) and the second scattering receiver (17) and the refraction receiver (15) can be charged via the second lens (6b), or
the imaging element (6) includes first, second and third lenses (6a, 6b, 6c) whose optical axes extend parallel to each other, wherein the radiation source (4a) is arranged outside the optical axis of the first lens (6a), and wherein the first lens (6a) can be charged with coupling radiation (5a) of the radiation source (4a), and the first scattering receiver (16) can be charged via the first lens (6a), the second scattering receiver (17) and the refraction receiver (15) via the second lens (6b), and the reference receiver (14) via the third lens (6c).

2. The device according to claim 1, **characterized by** at least one transmission receiver (18) for receiving radiation transmitted through the sample, wherein the transmission receiver (18) is arranged in the surface (3) of the scattering receivers (16, 17).

3. The device according to claim 1 or 2, **characterized in that** the radiation source (4a) can be used to irradiate a predetermined volume of the sample (2).

4. The device according to any of the preceding claims, **characterized in that** the surface (3) in which the scattering receivers (16, 17) are arranged extends in the focal plane of the imaging element (6).

5. The device according to any of the preceding claims, **characterized in that** the second scattering receiver (17) is arranged in such a way that it receives scattered radiation from a specifiable volume of the sample (2), wherein the specifiable volume is specified by the fact that the cross-section of the radiation generated by the radiation source (4a) and/or of the scattered radiation is specified by means of a diaphragm.

6. The device according to any of the preceding claims, **characterized in that** the first scattering receiver (16) is arranged closer to the radiation source (4a) than the second scattering receiver (17).

7. The device according to any of the preceding claims, **characterized by** at least one second protective element (8) which is to be arranged on a side of the sample (2) facing away from the scattering receivers (16, 17).

8. The device according to any of the preceding claims as far as related to claim 3, **characterized by** a reference radiation reflector (22) which can be charged with coupling radiation (5c) of a further radiation source (4c) arranged in the surface (3) of the scattering receivers (16, 17), wherein the reference receiver (14) receives the radiation (10b) reflected on the reference radiation reflector (22), wherein in particular the intensity of the coupling radiation (5c) of the further radiation source (4c) is proportional to the intensity of the coupling radiation (5a, 5c) of the radiation source (4a, 4b) for charging the scattering receivers (16, 17).

9. The device according to claims 8 and 9, **characterized in that** on a side of the sample (2) facing away from the scattering receivers (16, 17) a transmission radiation reflector (9) is arranged, and that the radiation source (4a) and the receivers (14-18) are arranged in the common surface (3) and the imaging element (6) and the first protective element (7) are arranged downstream and configured in such a way that the reference receiver (14) receives radiation reflected by the sensor-side boundary surface of the protective element (7), the refraction receiver (15) receives radiation reflected by a sample-side boundary surface (7a) of the protective element (7), the first scattering receiver (16) receives saturated scattered radiation of the sample (2), which is directed at a defined angle to a coupling radiation generated by the radiation source (4a), the second scattering receiver (17) receives linear scattered radiation of the sample (2), which is directed at a defined angle to the coupling radiation, and the transmission receiver (18) receives radiation which is transmitted through the sample (2) and the second protective element (8) and thereafter reflected on the transmission radiation reflector (9) and again transmitted back through the sample (2).

10. The device according to any of the preceding claims as far as related to claim 2, **characterized in that** the transmission receiver (18) is arranged in the immediate vicinity of or on the optical axis of the first lens (6a).

11. The device according to any of the preceding claims, **characterized in that** for measuring the transmission in the surface (3) of the scattering receivers (16, 17) a further radiation source (4b) is arranged.

12. The device according to claim 11 and any of claims 1 to 10 as far as related to claim 2, **characterized in that** the first lens (6a) is configured and arranged in such a way that it is charged with coupling radiation (5b) of the further radiation source (4b) and radiation gets onto the transmission receiver (18) via the first lens (6a).

13. The device according to any of the preceding claims, **characterized in that** downstream of the imaging element (6) a partly transparent mirror (20) is arranged and configured in such a way that a part of the coupling radiation (5a) of the radiation source (4a) penetrates the mirror (20), wherein a part of saturated scattering radiation (12a) proceeding from the sample (2) is reflected by the mirror (20).

## Revendications

1. Dispositif pour mesurer la dispersion d'un échantillon (2), avec
- au moins un premier et un second récepteur de dispersion (16, 17) pour la réception d'un rayonnement dispersé de l'échantillon (2) ; et
- au moins un élément de représentation (6) par le biais duquel un rayonnement vers l'échantillon (2) et depuis l'échantillon (2) peut parvenir aux récepteurs de dispersion (16, 17),
- le premier et le second récepteur de dispersion (16, 17) étant disposés dans une surface commune plane ou sphériquement incurvée (3), qui est orientée perpendiculairement à un axe optique de l'élément de représentation (6) ;
- un élément de protection (7), qui est à disposer sur un côté, tourné vers les récepteurs de dispersion (16, 17), de l'échantillon (2) ;
- au moins un récepteur de réfraction (15) disposé dans la surface (3) du récepteur de dispersion (16, 17), qui est conçu pour la réception d'un rayonnement réfléchi de manière spéculaire contre une surface limite (7b) côté échantillon de l'élément de protection (7) ; et
- une source de rayonnement (4a) disposée dans la surface (3) des récepteurs de dispersion (16, 17),
le premier récepteur de dispersion (16) étant conçu et disposé pour la réception d'un rayonnement dispersé saturé de l'échantillon (2) et le second récepteur de dispersion (17) étant conçu et disposé pour la réception d'un rayonnement dispersé linéaire de l'échantillon (2), le premier récepteur de dispersion (16) étant disposé de sorte à recevoir un rayonnement dispersé à partir d'un plus grand volume de l'échantillon (2) que le second récepteur de dispersion (17) ; le dispositif comprenant au moins un récepteur de référence (14), disposé dans la surface (3) des récepteurs de dispersion (16, 17), qui est conçu pour la réception d'un rayonnement réfléchi contre une surface limite (7a) côté capteur de l'élément de protection (7), et
l'élément de représentation (6) comprenant au moins une première et une deuxième lentille (6a, 6b) dont les axes optiques s'étendent parallèlement les uns aux autres, la source de rayonnement (4a) étant disposée en dehors de l'axe optique de la première lentille (6a), et la première lentille (6a) pouvant être exposée à un rayonnement d'injection (5a) de la source de rayonnement (4a) et le premier récepteur de dispersion (16) et le récepteur de référence (14) pouvant être exposés par le biais de la première lentille (6a), et le second récepteur de dispersion (17) et le récepteur de réfraction (15) peuvent être exposés par le biais de la deuxième lentille (6b), ou
l'élément de représentation (6) comprend une première, une deuxième et une troisième lentille (6a, 6b, 6c) dont les axes optiques s'étendent parallèlement les uns aux autres, la source de rayonnement (4a) étant disposée en dehors de l'axe optique de la première lentille (6a), la première lentille (6a) pouvant être exposée à un rayonnement d'injection (5a) de la source de rayonnement (4a) et le premier récepteur de dispersion (16) pouvant être exposé par le biais de la première lentille (6a), le second récepteur de dispersion (17) et le récepteur de réfraction (15) pouvant être exposés par le biais de la deuxième lentille (6b) et, le récepteur de référence (14) pouvant être exposé par le biais de la troisième lentille (6c).

2. Dispositif selon la revendication 1, **caractérisé par** au moins un récepteur de transmission (18) pour la réception d'un rayonnement transmis par l'échantillon, le récepteur de transmission (18) étant disposé dans la surface (3) des récepteurs de dispersion (16, 17).

3. Dispositif selon la revendication 1 ou 2, **caractérisé en ce qu'**un volume prédéfini de l'échantillon (2) peut être soumis à un rayonnement avec la source de rayonnement (4a).

4. Dispositif selon l'une quelconque des revendications précédentes, **caractérisé en ce que** la surface (3), dans laquelle les récepteurs de dispersion (16, 17) sont disposés, s'étend dans le plan focal de l'élément de représentation (6).

5. Dispositif selon l'une quelconque des revendications précédentes, **caractérisé en ce que** le second récepteur de dispersion (17) est disposé de sorte qu'il reçoit un rayonnement dispersé depuis un volume prédéfinissable de l'échantillon (2),
le volume prédéfinissable étant prédéfini **en ce que** la section transversale du rayonnement généré par la source de rayonnement (4a) et/ou du rayonnement dispersé est déterminée avec un obturateur.

6. Dispositif selon l'une quelconque des revendications précédentes, **caractérisé en ce que** le premier récepteur de dispersion (16) est disposé plus près de la source de rayonnement (4a) que le second récepteur de dispersion (17).

7. Dispositif selon l'une quelconque des revendications précédentes, **caractérisé par** au moins un second élément de protection (8) qui doit être disposé sur un côté, opposé aux récepteurs de dispersion (16, 17), de l'échantillon (2).

8. Dispositif selon l'une quelconque des revendications précédentes si référence à la revendication 3, **caractérisé par** un réflecteur de rayonnement de référence (22), qui peut être exposé à un rayonnement d'injection (5c) d'une autre source de rayonnement (4c) disposée dans la surface (3) des récepteurs de dispersion (16, 17), le récepteur de référence (14) recevant le rayonnement (10b) réfléchi contre le réflecteur de rayonnement de référence (22), dans lequel en particulier l'intensité du rayonnement d'injection (5c) de l'autre source de rayonnement (4c) est proportionnelle à l'intensité du rayonnement d'injection (5a, 5b) de la source de rayonnement (4a, 4b) pour l'exposition des récepteurs de dispersion (16, 17).

9. Dispositif selon les revendications 8 et 9, **caractérisé en ce qu'**un réflecteur de rayonnement de transmission (9) est disposé sur un côté, opposé aux récepteurs de dispersion (16,17), de l'échantillon (2), et **en ce que** la source de rayonnement (4a) et les récepteurs (14-18) sont disposés de telle sorte dans la surface commune (3), et l'élément de représentation (6) et le premier élément de protection (7) sont disposés en aval et conçus de telle sorte, qu'un rayonnement réfléchi par la surface limite côté capteur de l'élément de protection (7) est reçu par le récepteur de référence (14), que pour le récepteur de réfraction (15) est reçu un rayonnement réfléchi par une surface limite (7a) côté échantillon de l'élément de protection (7), qu'un rayonnement dispersé de l'échantillon (2), saturé et dirigé avec un angle défini par rapport à un rayonnement d'injection généré par la source de rayonnement (4a) est reçu par le premier récepteur de dispersion (16), qu'un rayonnement dispersé de l'échantillon (2) linéaire et dirigé avec un angle défini par rapport au rayonnement d'injection est reçu par le second récepteur de dispersion (17) et qu'un rayonnement transmis par l'échantillon (2) et par le second élément de protection (8) et ensuite réfléchi contre le réflecteur de rayonnement de transmission (9) et transmis de nouveau en retour par l'échantillon (2) est reçu par le récepteur de transmission (18).

10. Dispositif selon l'une quelconque des revendications précédentes si référence à la revendication 2, **caractérisé en ce que** le récepteur de transmission (18) est disposé à proximité immédiate de l'axe optique de la première lentille (6a) ou sur celui-ci.

11. Dispositif selon l'une quelconque des revendications précédentes, **caractérisé en ce que**, pour la mesure de la transmission, une autre source de rayonnement (4b) est disposée dans la surface (3) des récepteurs de dispersion (16, 17).

12. Dispositif selon la revendication 11 et selon l'une quelconque des revendications 1 à 10 si référence à la revendication 2, **caractérisé en ce que** la première lentille (6a) est conçue et disposée de sorte qu'elle est exposée à un rayonnement d'injection (5b) de l'autre source de rayonnement (4b) et qu'un rayonnement parvient sur le récepteur de transmission (18) par le biais de la première lentille (6a).

13. Dispositif selon l'une quelconque des revendications précédentes, **caractérisé en ce qu'**un miroir (20) en partie transparent est conçu et disposé en aval de l'élément de représentation (6) de sorte qu'une partie du rayonnement d'injection (5a) de la source de rayonnement (4a) traverse le miroir (20), une partie du rayonnement dispersé (12a) saturé sortant de l'échantillon (2) étant réfléchie par le miroir (20).
